# EUROPEAN PATENT APPLICATION

(11) **EP 2 026 581 A2**
(43) Date of publication of application: **18.02.2009**
(21) Application number: 08252203.8
(22) Date of filing: 26.06.2008
(51) Int. Cl.: H04N 7/24

(54) **Communication broadcasting linkage service providing system**

(30) Priority: 11.07.2007 JP 2007182373; 11.07.2007 JP 2007182382; 14.04.2008 JP 2008105033
(71) Applicant: Tixe Co., Ltd., Minato-ku Tokyo 107-0052 (JP)
(72) Inventor: Kato, Kazuhiro, Tokyo 107-0052 (JP)
(74) Representative: Cross, Rupert Edward Blount

(57) **Abstract**

Authentication as to whether a viewer actually watched a TV program is performed using an identifier such as an event ID of digital broadcasting, and a benefit such as TV mileage is provided to a viewer who watched the program. An identifier such as an event ID, which is assigned to a broadcast program is recorded in storage means of a verification management system in advance, and an identifier included in verification information received from a digital broadcasting receiver and the identifier recorded in the storage means are compared, whereby whether the viewer watched the program is authenticated. If the authentication succeeded, a benefit such as TV mileage is provided to the viewer.

## Description

The present invention relates to an information processing technology for providing a communication broadcasting linkage service using digital broadcasting.

Currently digital broadcasting is rapidly spreading. In April 2006, "One seg broadcasting" (one segment broadcasting), which is a ground digital broadcasting distributed to mobile communication equipment, such as mobile telephones, began, and the number of "one seg" mobile units in 2010 is projected to be 24, 820, 000 (provided by Nomura Research Institute) or 34, 800, 000 (provided by Yano Research Institute). In July 2011, it is projected that current analog broadcasting in Japan will completely shift to digital broadcasting.

Also recently the use of such electronic monies as Edy^{™} and Suica^{™} is rapidly spreading. Edy, for example, is an electronic money using a non-contact IC card, and the number of issued Edy cards has exceeded 40, 000, 000 as of May 2008.

Given this background, the present applicant has obtained a patent on a basic technology related to a digital broadcasting system for verifying whether a viewer was watching a program in real-time when the program was broadcast, in order to implement a service utilizing the characteristics of digital broadcasting (Japanese Patent Publication No. 3842281). According to this patent invention, authentication is performed using an event ID, which is secure information linked with a broadcasting facility, so that such digital content (benefit) as point service, mileage and electronic coupons can be provided only to viewers who actually watched a specific TV program.

Japanese Patent Publication No. 3842281 discloses a basic technology to authenticate whether a viewer watched a predetermined program using an event ID in a digital broadcasting system.

With the foregoing in view, it is an object of the present invention to provide an application technology of a communication broadcasting linkage service utilizing digital broadcasting based on the above mentioned basic technology. According to a few concrete modes of the present invention, it is authenticated whether a viewer actually watched a specific TV program using an identifier such as an event ID, so as to provide such benefits as point service, mileage and electronic coupons.

According to other concrete modes of the present invention, a benefit is provided to a viewer who actually watched a specific program if it is within a predetermined period from the broadcasting of a program, and the benefit is not provided after a predetermined period has elapsed.

To solve the above problem, a communication broadcasting linkage service providing system according to the present invention comprises: a digital broadcasting transmission system for transmitting digital broadcasting; a digital broadcasting receiver for receiving digital broadcasting; and a verification management system for verifying whether a viewer watched a program. Here the digital broadcasting transmission system comprises means for transmitting digital broadcasting program data including an identifier for uniquely specifying a program. The digital broadcasting receiver comprises: digital broadcasting receiving means for receiving the digital broadcasting program data transmitted from the digital broadcast transmission system; viewing information acquisition means for acquiring an identifier from the digital broadcasting program data received by the digital broadcasting receiving means, and recording the identifier in the viewing information storage means; and transmission means for transmitting verification information including an identifier stored in the viewing information storage means. The verification management system comprises: on-air information storage means for receiving the digital broadcasting program data transmitted from the digital broadcasting transmission system, and storing an identifier assigned to the program; communication means for receiving the verification information transmitted from the digital broadcasting receiver; and verification means for comparing the identifier included in the verification information received by the communication means and the identifier stored in the on-air information storage means, and authenticating whether the viewer watched a program.

It is preferable that the verification management system further comprises: benefit granting means for transmitting information on a benefit when it is authenticated that the viewer watched a program as a result of the authentication by the verification means, and the digital broadcasting receiver further comprises benefit storage means for storing information on a benefit transmitted by the benefit granting means when the information on a benefit is received.

In the present invention, a "benefit" is a generic term for an incentive provided to consumers as a method to promote commercial sales. Concrete examples are point service, mileage and coupons. "Point service" includes a service of adding points according to money spent or the access status, providing such benefits as gifts and discounts in exchange for a predetermined number of points. "Mileage" is a kind of point service, providing various benefits according to the degree of using a predetermined service (e.g. airlines). A "coupon" includes a service to provide such benefits as premiums and discounts in exchange for a printed coupon or coupons displayed on screen.

It is preferable that the communication broadcasting linkage system further comprises a store terminal that is an information terminal device installed at a retail store or a commerce server for managing an electronic commerce site, where the store terminal comprises means for receiving the verification information transmitted from the digital broadcasting receiver, and transmitting the received verification information to the verification management system, and means for receiving the information on a benefit transmitted from the verification management system, and transmitting the information to the digital broadcasting receiver.

It is preferable that when receiving information on a benefit transmitted from the verification management system, the store terminal reduces the settlement of a user of the digital broadcasting receiver instead of transmitting the information to the digital broadcasting receiver.

A service providing method according to the present invention is a method for providing a service to a viewer in a communication broadcasting linkage service providing system which comprises a digital broadcasting transmission system for transmitting digital broadcasting, a digital broadcasting receiver for receiving digital broadcasting and a verification management system for verifying whether a viewer watched a program, the method comprising the steps of: the digital broadcasting transmission system transmitting digital broadcasting program data including an identifier for uniquely specifying a program; the verification management system receiving the digital broadcasting program data transmitted from the digital broadcasting transmission system, and recording an identifier assigned to the program in the on-air information storage means; the digital broadcasting receiver receiving the digital broadcasting program data transmitted from the digital broadcasting transmission system; the digital broadcasting receiver acquiring an identifier from the received digital broadcasting program data in the viewing information storage means; the digital broadcasting receiver transmitting verification information including the identifier stored in the viewing information storage means; the verification management system receiving the verification information transmitted from the digital broadcasting receiver; and the verification management system comparing the identifier included in the received verification information and the identifier stored in the on-air information storage means, and authenticating whether the viewer watched a program.

It is preferable that the service providing method further comprises: a step of the verification management system transmitting information on a benefit when it is authenticated that the viewer watched a program as a result of the authentication, and a step of the digital broadcasting receiver storing the information on a benefit when the information on a benefit is received.

A verification management system according to the present invention comprises: on-air information storage means for receiving digital broadcasting program data on a program being broadcast and storing an identifier assigned to this program; communication means for receiving verification information transmitted from a digital broadcasting receiver; and verification means for comparing an identifier included in the verification information received by the communication means and the identifier stored in the on-air information storage means, and authenticating whether a viewer watched a program.

It is preferable that the verification management system further comprises benefit granting means for transmitting information on a benefit to the digital broadcasting receiver when it is authenticated that the viewer watched a program as a result of the authentication by the verification means.

It is preferable that the on-air information storage means stores verification conditions which specify conditions to authenticate whether the viewer watched a program, and the verification means authenticates that the viewer watched the program when the verification conditions are satisfied.

It is also preferable that the on-air information storage means also stores benefit granting information which specifies information on granting of a benefit in association with the identifier, and the benefit granting means refers to the benefit granting information, and decides a benefit to be granted to a viewer.

Another service providing method according to the present invention is a method for providing a service by authenticating whether a viewer watched a program, based on autonomous control of a computer, the method comprising the steps of: receiving digital broadcasting program data on a program being broadcast and storing an identifier assigned to this program in the on-air information storage means, in association with the program; receiving verification information transmitted from a digital broadcasting receiver; and comparing an identifier included in the received verification information and the identifier stored in the on-air information storage means, and authenticating whether a viewer watched a program.

It is preferable to include a step of transmitting information on a benefit to the digital broadcasting receiver when it is authenticated that the viewer watched a program as a result of the authentication.

A program of the present invention is to causing a computer to execute each step of the service providing method of the present invention. The program of the present invention can be installed or loaded to the computer via various recoding media, including such an optical disk as a CD-ROM, magnetic disk and semiconductor memory, or downloading via a communication network.

In the present description, "means" does not simply refer to a physical means, but includes the case of implementing the functions of the means by software. The functions of one means may be implemented by two or more physical means, or the functions of two or more means may be implemented by one physical means.

According to the communication broadcasting linkage service providing system and the service providing method of the present invention, such added values as coupons and points can be provided to TV viewers using such an identifier as an event ID. Also a system that grants benefits, such as discounts, can be provided when a TV viewer visits a store or accesses an EC site.

According to the present invention, a benefit can be provided to a viewer who actually watched a specific TV program during a predetermined period after the broadcast of the program, but the benefit is not provided after a predetermined period has elapsed. By this, the processing load on the system can be decreased, and the effects of a campaign can be increased.
Fig. 1 is a block diagram depicting a general configuration of a communication broadcasting linkage service providing system 100;
Fig. 2 is a block diagram depicting an example of the general configuration of a digital broadcasting transmission system 10;
Fig. 3 is a block diagram depicting an example of the general configuration of a digital broadcasting receiver 20;
Fig. 4 is a block diagram depicting an example of the functional configuration of the digital broadcasting receiver 20;
Fig. 5 is a block diagram depicting an example of the configuration of a verification management system 30;
Fig. 6 is a flow chart depicting an example of the processing flow for granting TV mileage only to viewers who watched a program, using the communication broadcasting linkage service providing system 100;
Fig. 7 is a flow chart depicting another example of the processing flow for granting TV mileage only to viewers who watched a program, using the communication broadcasting linkage service providing system 100; and
Fig. 8 is a flow chart depicting an example of the processing flow for granting a coupon only to viewers who watched a program, using the communication broadcasting linkage service providing system 100.

Embodiments of the present invention will now be described with reference to the drawings. The same composing elements are denoted with a same reference numeral, where redundant description is omitted.

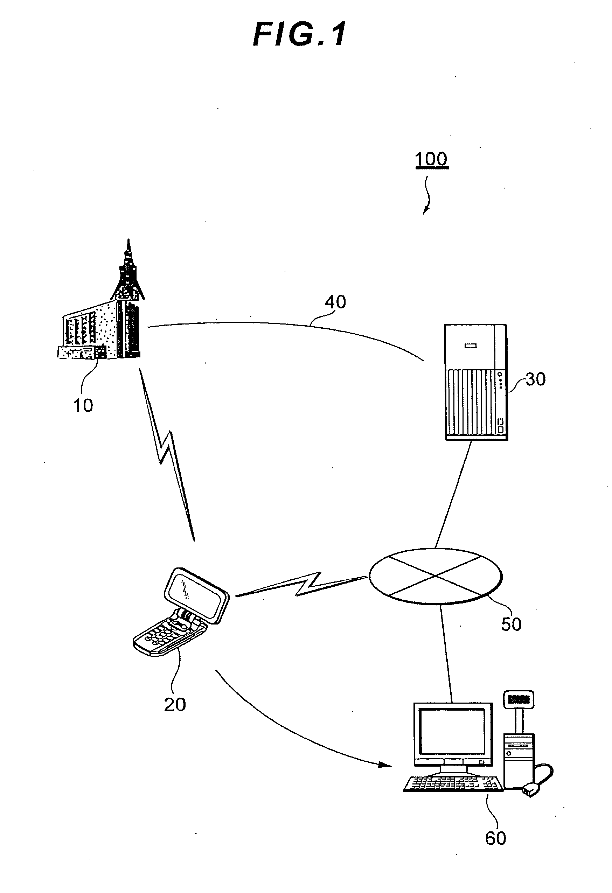

Fig. 1 is a block diagram depicting a general configuration of a communication broadcasting linkage service providing system 100 according to an embodiment of the present invention. As Fig. 1 shows, the communication broadcasting linkage service system 100 comprises a digital broadcasting transmission system 10, a digital broadcasting receiver 20 and a verification management system 30. The digital broadcasting transmission system 10 and the verification management system 30 can be interconnected via a leased line or public transmission line 40. The digital broadcasting receiver 20 and the verification management system 30 can be interconnected via a leased line or public communication line 50. A store terminal 60, which is installed in such a store as a convenience store or retail store, can be connected to the communication line 50. The digital broadcasting receiver 20 receives digital broadcasting which is transmitted from the digital broadcasting transmission system 10.

The digital broadcasting transmission system 10 corresponds to a broadcasting station, and has a function for transmitting a digital broadcasting program with BML received from a BML generation server (not illustrated) to video data for the program including voice data and image (motion picture) data. The BML generation server is also a computer server for creating content of the data broadcasting by generating BML content (hereafter called "BML") described based on BML (Broadcast Markup Language), which is a page description language for data broadcasting.

The digital broadcasting receiver 20 is a terminal device which can receive and allow watching a digital broadcasting program transmitted by the digital broadcasting transmission system 10. A preferred example of the digital broadcasting receiver 20 is a portable terminal device, such as a mobile telephone, corresponding to a ground digital broadcasting (one seg broadcasting) for mobile equipment, but a personal computer (PC) comprising a one seg tuner or set top box (STB), which can receive digital broadcasting, can also be used. The digital broadcasting receiver 20 need not be a single equipment unit, but may be comprised of a digital TV, which can receive digital broadcasting, and a mobile telephone having a two-dimensional code read function, for example. A TV for receiving analog broadcasting, where a tuner for ground wave digital reception is installed, may be used.

The verification management system 30 has a function to verify service information on the broadcast program (hereafter "SI information") and store a part or all of the SI information. It is preferable that the SI information is received from the digital broadcasting transmission system 10. The SI information includes event IDs. The verification management system 30 also has a function to verify and judge whether a user (viewer) of the digital broadcasting receiver 20 actually watched a broadcast program, based on the information transmitted from the digital broadcasting receiver 20.

The transmission line 40 is a transmission line (line) for transmitting information by broadcasting or communication, and is a line which can transmit the SI information of a digital broadcasting program between the digital broadcasting transmission system 10 and the verification management system 30. The transmission line 40 can be any of a broadcasting network, Internet, LAN, leased line, packet communication network, telephone line, intranet and other broadcasting communication lines, or combinations thereof, regardless whether it is cable or radio.

The communication line 50 is a communication line for transmitting/receiving information for verifying watching of a digital broadcasting program between the digital broadcasting receiver 20 and the verification management system 30. The communication line 50 can be any of Internet, LAN, leased line, packet communication network, telephone line, intranet, infrared communication and other communication lines or combinations thereof, regardless whether it is cable or radio.

The store terminal 60 is a computer terminal device installed in a retail store, such as a convenience store or department store. For example, a POS register terminal or multipurpose information terminal installed in a convenience store could be used. The store terminal 60 preferably has a reader for using electronic money. In the present embodiment, the store terminal 60 is constructed such that information is acquired from the digital broadcasting receiver 20, and can be exchanged with the verification management system 30 via the communication line 50.

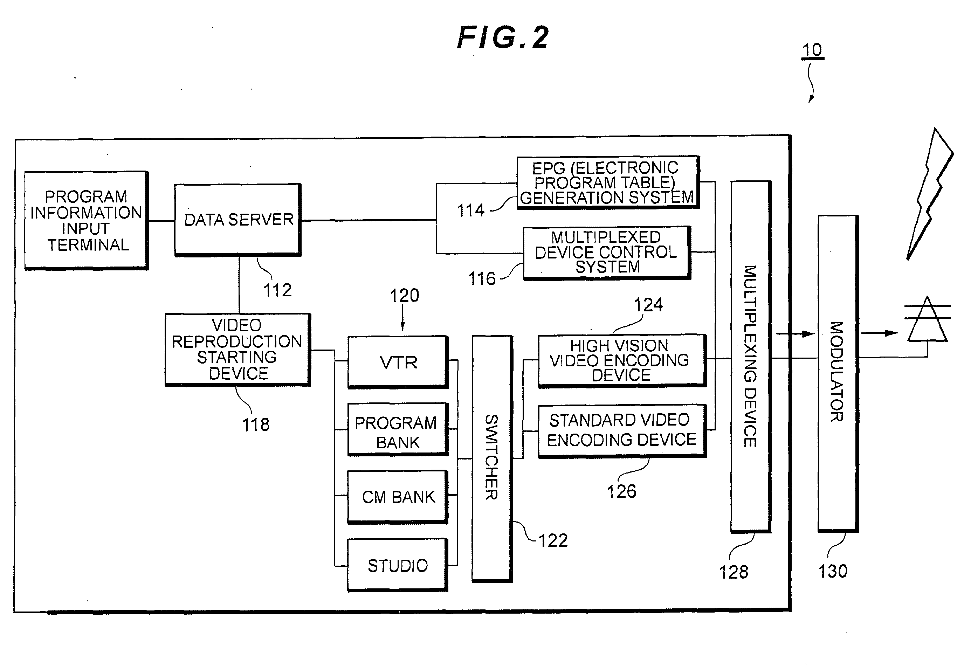

Fig. 2 is a block diagram depicting an example of a general configuration of the digital broadcasting transmission system 10. In the present embodiment, the digital broadcasting transmission system 10 comprises a program information input terminal 110, data server 112, EPG (Electronic ProGram table) generation system 114, multiplexed device control system 116, video reproduction start control device 118, video material (VTR, various banks, such as a program bank and CM bank, and studio) 120, switcher 122, high vision video encoder 124, standard video encoding device 126, multiplexing device 128, and modulator 130. Each of the composing elements is well known in ordinary digital broadcasting transmission facilities, so detailed description thereof is omitted.

In the present invention, an event ID, which is used for authenticating whether the viewer watched a predetermined program or not, is automatically assigned to the program information input terminal 110. The event ID assigned here is modulated to a digital broadcasting signal via the data server 112, EPG generation system 114, multiplexing device 128 and modulator 130, and is broadcast. In other words, an event ID, which is an identifier for uniquely specifying a program, is data included in the digital broadcasting signal (digital broadcasting program data) itself to be broadcast.

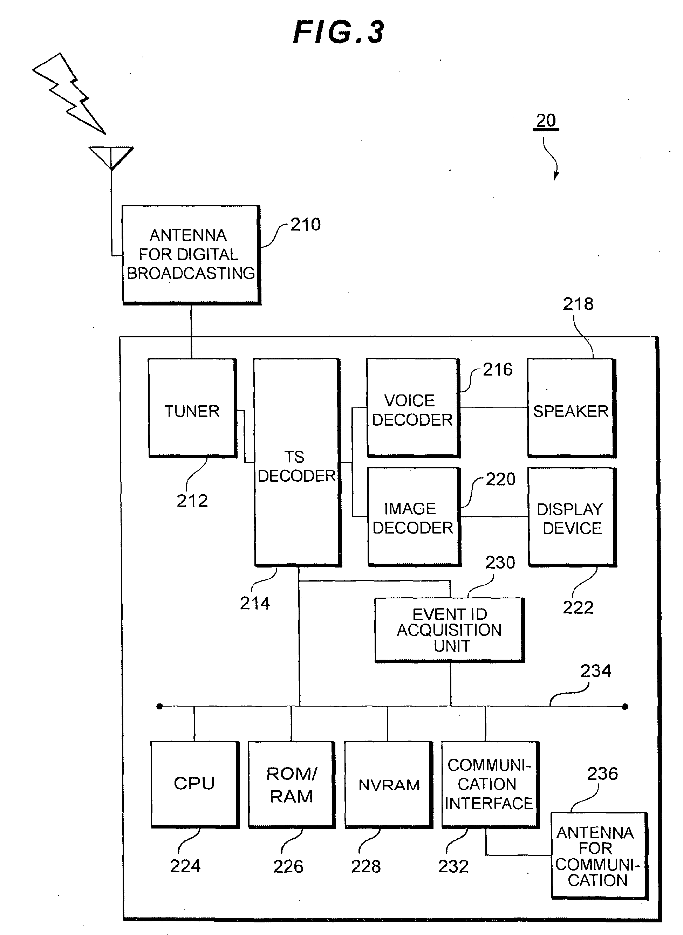

Fig. 3 is a block diagram depicting an example of a general configuration of the digital broadcasting receiver 20. In the present embodiment, the digital broadcasting receiver 20 comprises an antenna for digital broadcasting 210 for receiving digital broadcasting, and a tuner 212 for converting the received digital broadcasting signal into a signal which can be viewed by output means, where the signal converted by the tuner 212 is sent to a TS decoder 214 which fetches a header section, video data and BML. A voice decoder 216 decodes the video data encoded by the TS decoder 214, fetches voice data, and outputs voice from a speaker 218. The image decoder 220 decodes the video data decoded by the TS decoder 214 and fetches image data, and outputs the image, such as a motion picture, using a display device 222.

The digital broadcasting receiver 20 also comprises a CPU 224 for controlling the operation and processing of the digital broadcasting receiver 20, a ROM and/or RAM 226 for storing programs and necessary data, an NVRAM 228 for storing BML decoded by the TS decoder 214 and storing a BML browser for reproducing the content described by BML, an event ID acquisition unit 230 for acquiring an event ID from a header section decoded by the TS decoder 214 using a receiver control unit, which is not illustrated, and transmitting the event ID to the NVRAM 228, a communication interface 232 for performing data communication with the verification management system 30, a bus 234 connecting these composing elements, and an antenna 236 for data communication.

An event ID is an identifier assigned to a digital broadcasting program for each program, so as to identify a respective program in the digital broadcasting. For this event ID, it is preferable that an identifier (event ID) used originally for an electronic program table (EPG) is used for such a purpose as program watching authentication in the present invention. Instead of assigning an event ID to each program unit, an event ID may be assigned to each unit smaller than a program, such as each corner and each CM in a program.

The event ID acquisition unit 230 may be constructed by hardware, such as a dedicated semiconductor chip, or by software, which implements desired functions by executing programs stored in such a memory as ROM, but in either case, the event ID acquisition unit is for extracting an event ID included in a received digital broadcasting signal (digital broadcasting program data).

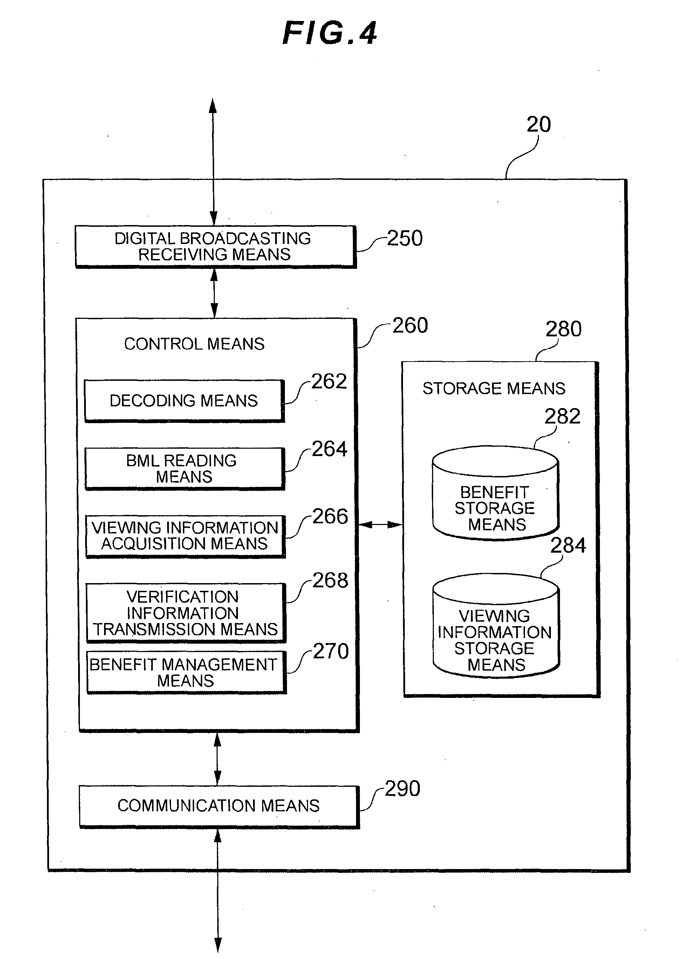

Fig. 4 is a block diagram depicting an example of the functional configuration of the digital broadcasting receiver 20. In the present embodiment, the digital broadcasting receiver 20 mainly comprises digital broadcasting receiving means 250 for receiving digital broadcasting from the digital broadcasting transmission system 10, control means 260 for controlling all operations of the digital broadcasting receiver 20, storage means 280 for storing necessary data, and communication means 290 for performing data communication with the verification management system 30. The control means 260 further comprises decoding means 262, BML reading means 264, viewing information acquisition means 266, verification information transmission means 268 and benefit management means 270. The storage means 280 further comprises benefit storage means 282 and viewing information storage means 284.

The digital broadcasting receiving means 250 has a function to receive signals of a digital broadcasting program, including video data on a program, and BML, which is content data for data broadcasting.

The decoding means 262 has a function to fetch the data of the header section, video data and BML from the signals converted from the digital broadcasting signals by the tuner, and fetch the voice signals and image signals (motion pictures) from the video data. The BML reading means 264 has a function to interpret BML and reproduce the content, and is implemented by a BML browser, for example.

The viewing information acquisition means 266 acquires viewing information when a program is watched via the digital broadcasting receiver 20, and stores the information in the viewing information storage means 284. For this viewing information, at least an identifier included in the received digital broadcasting signals is used. For example, the viewing information acquisition means 266 acquires an event ID included in the digital broadcasting signals from the digital broadcasting signals which are transmitted from the digital broadcasting transmission system 10 and received by the digital broadcasting receiver 20, on the program being output to the display device and currently being watched, and records the event ID in the viewing information storage means 284. In this case, it is preferable to acquire an event ID included in the header section fetched by the decoding means 262.

It is also preferable that the viewing information acquisition means 266 acquires information on the viewing date and time when a program is watched via the digital broadcasting receiver 20, and stores this information in the viewing information storage means 284, in association with the event ID acquired from the digital broadcasting signals of the watched program. Concerning the recording processing in the viewing information storage unit 284 by the viewing information acquisition means 266, data may be recorded at every predetermined time when watching a program, or may be recorded from the start point to the end point of the watched program. A command to instruct acquisition of information on viewing may be embedded in the BML included in the digital broadcasting signals in advance, so that an event ID is recorded when this command is executed by the digital broadcasting receiver 20. In this case, the date and time when the command is executed may be recorded as a viewing date and time, in association with the event ID. In the case of a program where viewers can participate, it is preferable that an event ID acquired when the viewer initiates an action, and the date and time thereof, are recorded in the viewing information storage unit 284, whenever the viewer action occurs.

It is preferable that the viewing information acquisition means 266 acquires the date and time using the clock (timer) function of the digital broadcasting receiver 20. In this case, if a recorded program is watched, information on the date and time when the program was actually watched (in other words, a different date and time from the original broadcasting) is recorded. It is even more preferable if the digital broadcasting receiver 20 receives standard radio waves for a radio clock and automatically corrects errors of the clock, in order to control errors of the viewing date and time to virtually zero. Depending on the verification conditions, information on the broadcasting date and time may be acquired from the SI information, so as to regard this information as the viewing date and time.

The verification information transmission means 268 has a function to generate verification information including at least an event ID, based on the information recorded in the viewing information storage means 284, and transmits the verification information to the outside (e.g. verification management system 30 and store terminal 60). In the present embodiment, verification information including an event ID and viewing date and time information, which is stored in association with the event ID, is generated, and is transmitted to the verification management system 30 directly or via the store terminal 60.

If the viewing information acquisition means 266 can acquire the expiration time of the event ID, then not only the event ID but the expiration time of the event ID as well may be recorded in the viewing information storage means 284, in association with the event ID. In this case, it is preferable that the verification information transmission means 268 does not transmit the verification information if the event ID to be transmitted exceeds the expiration time. By this, an increase of unnecessary communication traffic can be suppressed.

The benefit management means 270 has a function to manage and control the data on benefits, which are granted only to viewers who satisfy predetermined conditions. A benefit includes, for example, points, mileage, coupons, electronic money and such digital content as music and wall papers. For example, when a benefit is granted to a viewer, the data on this benefit is stored in the benefit storage means 282. When the viewer uses the benefit, a desired benefit is fetched from the benefit storage means 282, and the benefit is displayed on the display device, or the data is transmitted to the outside, according to the content of the benefit. For example, if the benefit is a coupon, and image of the coupon image is displayed on screen. And if the benefit is electronic money, the settlement information is transmitted to the settlement system of the electronic money.

The benefit storage means 282 records data on the benefits which are granted only to viewers who satisfy predetermined conditions. It is preferable that the quantity of points received from the verification management system 30 and such data as an image of a coupon are recorded in the benefit storage means 282. The content data for a benefit described in BML, which is received when broadcasting a program, (e.g. image of a coupon or incoming music), may be stored in the benefit storage means 282, so that only viewers who satisfy predetermined conditions can read this content data.

The viewing information storage means 284 records information on the viewing when the viewer watches a program. In the present embodiment, the viewing information acquisition means 266 stores the acquired information on an event ID and viewing date and time. In this case, an event ID of the watched program and the viewing date and time thereof are associated with each other and stored. The expiration time and other necessary information can also be stored in association with the event ID.

The communication means 290 is a communication interface which can transmit/receive information to/from the verification management system 30 via the communication line 50. The communication means 290 may access the verification management system 30 directly via the communication line 50, just like the Internet connection function of a mobile telephone, or may transmit information to a store terminal 60 using the infrared communication function of a mobile telephone (digital broadcasting receiver 20), and access the verification management system 30 from the store terminal 60 via the communication line 50. Also such code information as a QR code may be displayed on a display device of the digital broadcasting receiver 20, so that the store terminal 60 reads this code information, and the verification management system 30 is accessed from the store terminal 60 via the communication line 50.

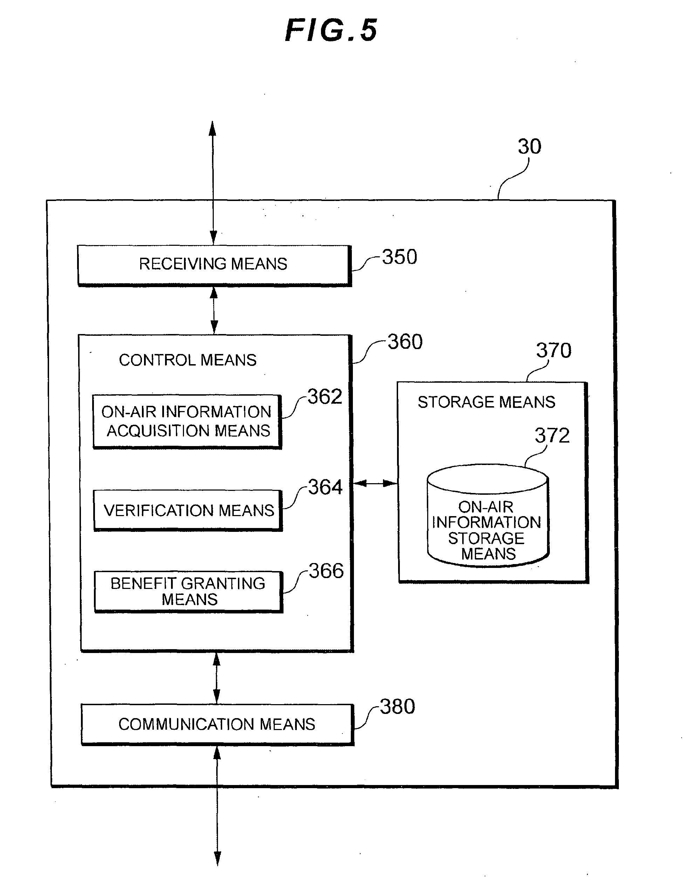

Fig. 5 is a block diagram depicting an example of a configuration of the verification management system 30. In the present embodiment, the verification management system 30 comprises receiving means 350 for receiving the BML for data broadcasting related to a program currently being broadcast and SI information including an event ID from the digital broadcasting transmission system 10, control means 360, such as a CPU, for controlling all processing and operations of the verification management system 30, storage means 370 including a memory and storage device for storing various information required for processing executed by the verification management system 30, and communication means 380 for performing data communication with the digital broadcasting receiver 20 or store terminal 60. Input/output means for inputting/outputting information and a bus connecting each of these means are also provided, although illustration thereof is omitted. The control means 360 further comprises on-air information acquisition means 362, verification means 364 and benefit granting means 366. The storage means 370 further comprises on-air information storage means 372.

The receiving means 350 has a function to receive information from the digital broadcasting transmission system 10 via the transmission line 40. The communication means 380 has a function to transmit/receive information to/from the digital broadcasting receiver 20 or store terminal 60 via the communication line 50.

The on-air information acquisition means 362 has a function to receive a program currently being broadcast from the digital broadcasting transmission system 10, and acquire an event ID related to the program being broadcast, and record the event ID in the on-air information storage means 372. It is preferable to acquire the broadcasting date and time of the program currently being broadcast and record this information in the on-air information storage means 372 in association with the event ID. In the present embodiment, an event ID is acquired from the SI information included in the header section of the digital broadcasting signals received from the digital broadcasting transmission system 10, and is recorded in the on-air information storage means 372. If the broadcasting date and time is recorded in association with the event ID, it is preferable to use the broadcasting date and time information included in the SI information in the received digital broadcasting signals. The broadcasting date and time may be acquired by measuring the date and time when the program was actually received using a clock (timer) function of the verification management system 30.

When verification conditions are set, the on-air information acquisition means 362 has a function to acquire the verification conditions and store this information in the on-air information storage means 372, in association with the event ID of the program. For the verification conditions, the verification conditions may be embedded in BML in advance, so as to acquire the verification conditions from the BML of the program currently being broadcast, or the sponsor may register the verification conditions before broadcasting the program, or during broadcasting or after broadcasting. The verification conditions are conditions for clearing verification only when these conditions are satisfied, and for example, such viewing conditions as watching a program for 20 minutes or more or watching a predetermined CM, or accessing three or more times in a program where a viewer can participate, can be set as verification conditions.

It is preferable to set an expiration time of an event ID for the verification condition. The expiration time of an event ID may be a period after the end of broadcasting, such as two weeks after the broadcasting of a program, or a predetermined day and time of expiration, such as July 11. If an expired event ID is used for verification, the verification means 364 does not grant authentication.

When an expiration time of an event ID is acquired, the on-air information acquisition means 362 records the acquired expiration time in the on-air information storage means 372 in association with this event ID. For example, if the expiration time is embedded in BML, an expiration time is extracted from the BML included in the digital broadcasting signals when the program is received, and is recorded in the on-air information storage means 372 in association with the event ID acquired from the digital broadcasting signals. If information on the expiration time of the event ID is embedded in the BML, the digital broadcasting receiver 20 or the verification management system 30 can manage the expiration time of an event ID merely by broadcasting the program, so new equipment for managing the expiration time need not be installed, and a new communication session for transmitting/receiving the expiration time information is unnecessary.

If the sponsor registers an expiration time in the verification management system 30, the sponsor registers information to identify the program and the expiration time first. In this case, the information to identify the program may be an event ID, or may be a combination of broadcasting the day of the week, the time zone and the channel number. On the other hand, when a program is received, the on-air information acquisition means 362 records an event ID acquired from the digital broadcasting signals in the on-air information storage means 372. It is checked whether the expiration time of the event ID has been registered at an arbitrary timing, and if registered, the expiration time is recorded in the on-air information storage means 372, in association with this event ID.

In this way, according to the present embodiment, the viewing conditions and expiration time can be arbitrarily set as the verification conditions, so various services and campaigns according to the desire of sponsors can be executed.

If benefit granting information, which specifies the kind of benefit to be granted, is set when authentication succeeds, the on-air information acquisition means 362 has a function to acquire the benefit granting information and store this information in the on-air information storage means 372 in association with the event ID of the program. The benefit granting information may be embedded in the BML of the broadcasting program in advance, and acquired from the BML, just like the above mentioned verification conditions, or the sponsor may directly register the benefit granting information. In the benefit granting information, the granting of different benefits may be specified according to the viewing status of the viewers. For example, point quantity is determined according to the viewing time, or different coupons are provided according to the status of participation in a program, in the case of a program where viewers can participate.

A predetermined benefit may be granted only to viewers who satisfy predetermined conditions. In this case, the verification conditions and the benefit granting information are associated and stored in the on-air information acquisition means 362. By this, a predetermined benefit is granted only to viewers who watched a serial drama continuously for 10 episodes, for example.

The verification means 364 has a function to receive verification information transmitted from the digital broadcasting receiver 20 directly or via a store terminal 60, and verify the event ID included in the verification information. If the viewing date and time information is included in the verification information, the event ID and viewing date and time included in the verification information and the event ID and broadcasting date and time stored in the on-air information storage means 372 are compared and verified as to whether this information matches. If verification conditions are recorded in the on-air information storage means 372 in association with the event ID, it is preferable to verify whether the verification conditions are satisfied, in addition to verify the event ID and viewing date and time information. If verification succeeds, the success of verification is notified to the benefit granting means 366.

If the expiration time of the event ID is registered in the on-air information storage means 372, it is verified whether the event ID included in the verification information is stored in the on-air information storage means 372, and if stored, it is verified whether this event ID does not exceed the expiration time. If the event ID included in the verification information is not stored in the on-air information storage means 372, or if the stored event ID is expired, authentication is not granted.

The benefit granting means 366 has a function to grant a benefit to a viewer if the verification result in the verification means 364 matches, that is, if it is authenticated that the viewer watched a broadcast program, and verification conditions are satisfied in the case when these conditions are set. If the benefit granting information is set, the benefit granting means 366 decides a benefit to be granted to the viewer based on the benefit granting information.

The on-air information storage means 372 associates and records the event ID and the broadcasting date and time. In this case, when a certain program is broadcast, the date and time when the broadcast started and the date and time when the broadcast ended may be recorded in association with an event ID of this program, or an event ID of a program currently being broadcast and current date and time information may be recorded at every predetermined time while the program is being broadcast. If the verification conditions are set, the verification conditions are recorded in association with the event ID. If an expiration time is set for an event ID as a verification condition, a record on an expired event ID is preferably deleted from the on-air storage means 372 at a predetermined timing. By this, a storage resource can be effectively utilized, and unnecessary processing can be minimized, so the processing load on the system can be decreased. If a benefit granting information is set, the benefit granting information is recorded in association with the event ID.

The verification management system 30 is implemented by a dedicated or general purpose computer. In this case, the verification management system 30 may be constructed by a single computer or by a plurality of computers distributed over a network. The verification management system 30 is also implemented by CPU executing a predetermined program stored in a memory or on an external storage device.

Now an example of the operation of the communication broadcasting linkage service providing system 100 of the present embodiment will be described. Here an example when a service to grant such a benefit as mileage (hereafter a benefit granted to a viewer who succeeded in verification is called "TV mileage") only to viewers who watched a program is implemented using this communication broadcasting linkage service providing system 100 will be described.

In the present embodiment, "TV mileage" refers to a kind of point service and a service to provide mileage according to the viewing status of TV, for example, where a predetermined mileage is exchanged for such benefits as a gift or a discount. This TV mileage is preferably not a point service that is limited to a point service granted only to viewers of a specific program, but is a point service commonly granted throughout a plurality of programs, regardless the sponsor of a specific program. It is preferable that the viewer can save TV mileage in the digital broadcasting receiver 20, and can exchange predetermined TV mileage for a coupon, electronic money, gift or discount.

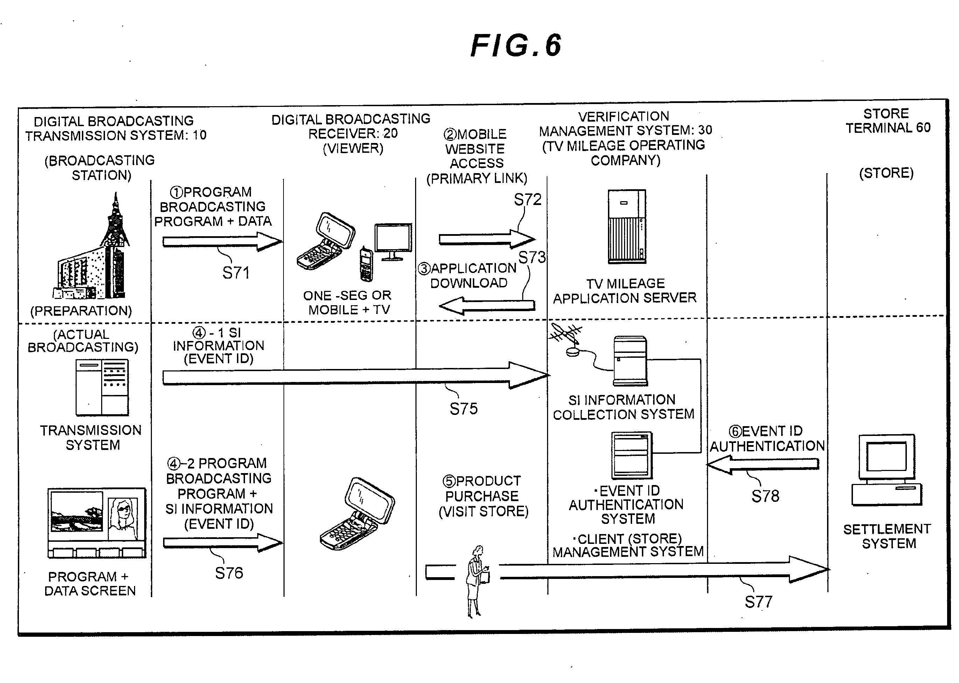

Fig. 6 is a flow chart depicting an example of the processing flow to provide TV mileage only to viewers who watched a specific program, using the communication broadcasting linkage service providing system 100.

First a viewer installs an application for saving TV mileage (hereafter "TV mileage application") in the digital broadcasting receiver 20 as preparation. The TV mileage application is a program allowing the digital broadcasting receiver 20 to function as the viewing information acquisition means 266, verification information transmission means 268, benefit management means 270, benefit storage means 282 and viewing information storage means 284. In the present example the TV mileage application implements a function to acquire an event ID from a currently watched program, a function to store the acquired event ID and viewing date and time information in association with each other, a function to fetch an event ID and viewing date and time information according to the instruction of the viewer, and transmit this to the outside, and a function to save the TV mileage when authentication succeeds and TV mileage is acquired.

In the TV mileage application installation processing, a broadcasting station broadcasts the video data on the program including data on the position information (e.g. URL) of a distribution site of the TV mileage application when a preview of a program, for example, is broadcast from the digital broadcasting transmission system 10 (S71). When the program and data are received, the digital broadcasting receiver 20 fetches the TV mileage distribution site from the received data, and accesses the site indicated by this position information according to an instruction by the viewer (S72), and downloads the TV mileage application (S73). In this way, the digital broadcasting receiver 20 installs the TV mileage application in advance before the program, which provides the TV mileage service, is broadcast.

It is preferable that the viewer installs the TV mileage application in the digital broadcasting receiver 20 in advance, before the actual broadcast of the program, but needless to say the viewer may install it during broadcast of the program. In Fig. 6, the TV mileage application distribution server is included in the verification management system 30, but the TV mileage application distribution server need not always be included in the verification management system 30. A plurality of distribution servers may be used. For example, each sponsor of a program may start up a TV mileage application distribution server individually.

Then a program to provide the TV mileage service is broadcast. The verification management system 30 receives SI information from the digital broadcasting transmission system 10 during actual broadcast of the program (when on air). It is preferable to receive the SI information in real-time during broadcast of the program. Then the verification management system 30 acquires an event ID of the program when on air from the received SI information, and stores this event ID in the on-air information storage means 372, in association with the broadcasting date and time information (S75).

The viewer, on the other hand, receives the program currently being broadcast via the digital broadcasting receiver 20. In this case, the receive signals of the program to be received include video data on the program and data including SI information. When a program is received, the digital broadcasting receiver 20 outputs image and voice based on the video data, acquires an event ID included in the SI information in real-time while watching the program, and stores this event ID in the viewing information storage means 284, in association with the viewing date and time information (S76).

When the program is being watched on a stationary TV, code information, such as two-dimensional code, may be displayed on the TV screen, and can be read by a code information reader function of a mobile telephone, so that the event ID can be recorded in portable equipment. In this case, the combination of a stationary TV and portable equipment corresponds to the digital broadcasting receiver 20.

When the program broadcast ends, the viewer goes to a predetermined store with the digital broadcasting receiver 20, shops (S77), and at settlement, the viewer sends the verification information including at least the event ID to the verification management system 30 via the store terminal 60, so as to have the verification information authenticated (S78).

Here an event ID and viewing date and time information recorded in association with the event ID are used as the verification information. The store terminal 60 acquires the event ID and viewing date and time information from the digital broadcasting receiver 20, and transmits this information to the verification management system 30. If a plurality of event IDs are recorded in the digital broadcasting receiver 20, it is preferable that the viewer selects a desired event ID out of the plurality of event IDs and transmits this and the viewing date and time information thereof. If a plurality of viewing date and time information exists for one event ID, then it is preferable to include the entire plurality of viewing date and time information in the verification information. By this, the time when the viewer watched the program can be authenticated in more detail.

The verification information to be transmitted to the verification management system 30 may include ID information for identifying the digital broadcasting receiver 20 or ID information for identifying the store terminal 60. The transmission/reception of information between the digital broadcasting receiver 20 and the store terminal 60 may be via infrared communication or via code information, such as two-dimensional code, or via cable connectors. The IC chip of the digital broadcasting receiver 20 may be read/written from the store terminal 60 via radio.

The verification management system 30 compares and verifies the verification information received via the store terminal 60 with the on-air information stored in the on-air information storage means 372, and judges whether the viewer watched the program. Specifically, the verification means 364 searches the on-air information storage means 372 based on the event ID included in the verification information, and specifies the broadcasting date and time related to this event ID, and authentication succeeds if the viewing date and time indicated by the viewing date and time information included in the verification information is within the range of this broadcasting date and time. If the verification conditions, such as the expiration time, has been set in association with this event ID, authentication succeeds if this verification information is satisfied, in addition to establishing the verification of the event ID and viewing date and time information. Other than this, if verification is not established, authentication fails.

If authentication succeeds, the verification management system 30 grants TV mileage to the viewer (that is, the user of the digital broadcasting receiver 20). If the benefit granting information stored in the on-air information storage means 372 in association with the event ID includes information on the TV mileage granted amount (hereafter called "mileage") when authentication succeeded, the granting mileage of TV mileage is decided based on this information. If the benefit granting information is not set, the default value of the TV mileage is granted.

When the authentication of verification information ends, the verification management system 30 returns the authentication result to the store terminal 60. If authentication succeeds, TV mileage newly granted this time by the authentication success is transmitted to the store terminal 60. If authentication fails, this failure is notified to the store terminal 60.

The store terminal 60 performs processing according to the authentication result. If authentication succeeded and TV mileage is granted, the viewer selects whether the TV mileage is to be saved or used immediately. To save TV mileage, the viewer transmits the mileage granted this time to the digital broadcasting receiver 20, and additionally records this mileage in the benefit storage means 282. To use the TV mileage, settlement is executed by decreasing the amount according to the granted mileage. If authentication fails, settlement is executed as usual.

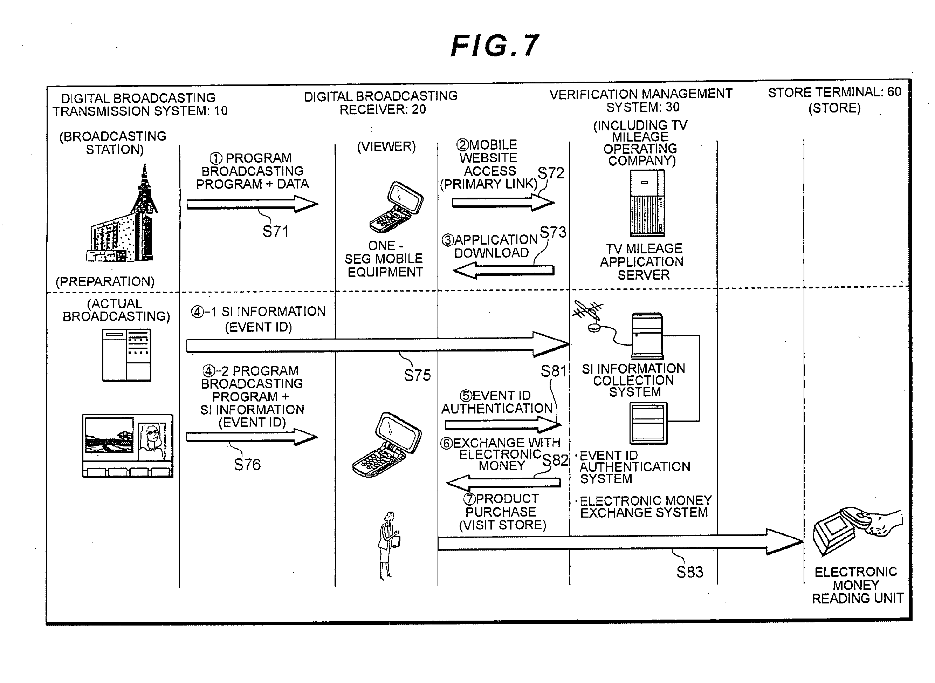

Fig. 7 is a flow chart depicting another example of processing flow to grant TV mileage only to viewers who watched a program, using the communication broadcasting linkage service providing system 100.

First installation of the TV mileage application in the digital broadcasting receiver 20 is required as a preparation, but this is the same as step S71 to step S73 in the previous example.

Then a program which provides the TV mileage service is broadcast, and during the broadcast of this program, the verification management system 30 receives the SI information of the program currently being broadcast, and the digital broadcasting receiver 20 acquires an event ID of the program being broadcast, and this is also the same as step S75 and step S76 of the previous example.

In this example, the verification information is transmitted from the digital broadcasting receiver 20 to the verification management system 30 when watching the program or after the program ends. When the verification information is received, the verification management system 30 authenticates whether the viewer watched a predetermined program based on the event ID included in the verification information (S81).

The verification information includes at least an event ID, just like the previous example, but in the present example, the verification information includes the event ID and viewing date and time information. The verification means 364 of the verification management system 30 compares this information with the information recorded in the on-air information storage means 372, and judges whether the viewer watched the program. If verification conditions have been set, it is judged whether the verification conditions are satisfied, in addition to the verification of the event ID and viewing date and time information.

If authentication succeeds, the verification management system 30 grants a predetermined amount of TV mileage based on the benefit granting information, but in the present example, the TV mileage is exchanged with electronic money referring to a table which defines the exchange rate of the TV mileage and electronic money. And the electronic money is sent to the digital broadcasting receiver 20 (S82). The electronic money that is granted may be specified as the benefit granting information, so that electronic money can be directly granted when authentication succeeded.

When electronic money is received from the verification management system 30, the digital broadcasting receiver 20 records this electronic money in the benefit storage means 282. If the digital broadcasting receiver 20 originally has the electronic money function, just like the case of "Osaifu - Keitai ^{™}" (mobile wallet"), it is preferable to save electronic money received from the verification management system 30 in the IC chip at this electronic money function side.

Thereafter, the viewer can freely use the electronic money acquired as a benefit (S83). For example, when the user shops at a predetermined store, settlement can be performed using the electronic money obtained as a result of watching a program.

In the description of the above embodiment, a terminal device installed in an actual store, such as a retail store, was assumed as the store terminal 60, but a server device for managing a net shop on the Internet and an EC site, such as an auction site, can also be assumed. In this case, the viewer accesses a predetermined EC site using the digital broadcasting receiver 20 when watching a program or after watching a program. The EC site transmits the verification information received from the digital broadcasting receiver 20 to the verification management system 30, confirms whether the viewer actually watched the program, and grants a benefit if authentication succeeds.

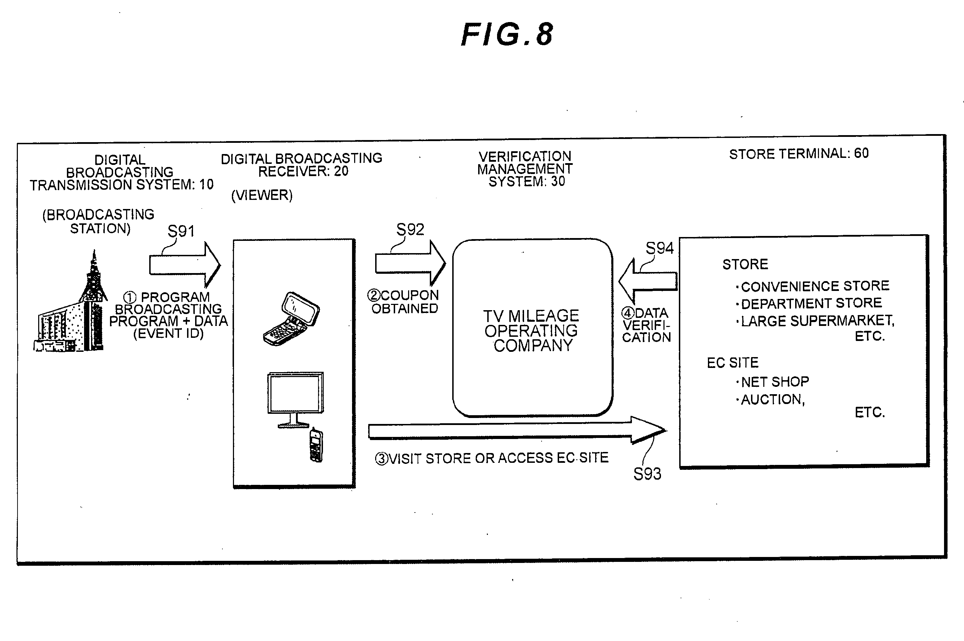

Fig. 8 is a flow chart depicting an example of a processing flow to provide a coupon only to a viewer who watched a program, using the communication broadcasting linkage service providing system 100.

When a viewer watches a TV program, viewing information including an event ID of the program is stored in the digital broadcasting receiver 20 (S91). The viewer accesses the verification management system 30 anytime, and obtains a coupon (S92). At this time, it is preferable that the verification management system 30 authenticates whether the viewer watched the program based on the verification information received from the digital broadcasting receiver 20, and issues the coupon only when authentication succeeded, and transmits the information on this coupon to the digital broadcasting receiver 20 of the viewer. The information on the coupon includes an image of the coupon and the identification ID of the coupon, and this information is stored in the benefit storage means 282. And based on an instruction of the viewer, the digital broadcasting receiver 20 displays the image of the coupon, which is read from the benefit storage means 282, on screen. The verification management system 30 may grant TV mileage to the viewer first when authentication succeeds, and then issues the coupon in exchange for a predetermined amount of mileage.

Then the viewer visits a store where the coupon can be used, or access an EC site, and performs settlement using this coupon (S93). At this time, the validity of the coupon of the user is confirmed. To confirm the validity, the clerk may visually confirm the coupon image displayed on the screen of the digital broadcasting receiver 20, but it is preferable that the verification management system 30 confirms the validity of the coupon. Specifically, the store terminal 60 receives the identification ID of the coupon from the digital broadcasting receiver 20, and sends this identification ID to the verification management system 30, where the validity of the coupon is confirmed based on this identification ID (S94). If the coupon is valid, settlement is executed according to the discount rate specified on the coupon.

As described above, according to the present invention, a system which can verify whether a viewer watched a program or not using an identifier, such as an event ID, can be provided. Since the identifier, such as an event ID, is embedded in the digital broadcast, security at least higher than the security specified in the operation specifications of the digital broadcasting can be guaranteed. It can be judged whether a viewer watched a program or not with certainty because such high security information is used.

Also according to the present embodiment, added values, including point service, mileage and coupons, can be provided to TV viewers. By this, a system, where a TV viewer who visits a store or accesses an EC site, can receive such a premium as a discount, can be provided. As a result, a TV program can be utilized for marketing and promoting visits to a store and accesses to an EC site.

By setting the viewing conditions and verification conditions such as expiration time, a sponsor can develop various campaigns under desired conditions. For example, if an expiration time is set, a benefit can be provided to a viewer who actually watched a specific TV program, if it is within a predetermined period after the broadcast of the program, and the benefit is not provided after the predetermined period has elapsed.

The present invention is not limited to the above embodiments, but can be implemented in various other ways within the scope of the spirit of the present invention. Therefore the above embodiments are merely examples in all aspects, and shall not be interpreted in a limited manner. For example, each processing step mentioned above can be executed in an arbitrary order, or in parallel in a scope where a contradiction is not generated in the processing content.

In the present embodiments, if an event ID is assigned to each CM unit, then such a benefit as TV mileage can be granted depending on whether a predetermined CM was actually watched.

If an expiration time of an event ID is described in BML of a program currently being broadcast, it is preferable that the digital broadcasting receiver 20 records the information on the expiration time of the event ID as well in the viewing information storage means 284, in association with the event ID, when the event ID is recorded. And when the expiration time of the unverified event ID approaches, a reminder of the nearness of the expiration time may be displayed on the display screen of the digital broadcasting receiver 20.

In the description of the present embodiment, it was assumed that the verification management system 30 manages the expiration time of an event ID, but if the expiration time is embedded in the BML of the program, the expiration time of the event ID may be managed by the digital broadcasting receiver 20 side. In this case, the viewing information acquisition means 266 extracts an event ID and expiration time from the digital broadcasting signal received by the digital broadcasting receiver 20, and records the event ID and the expiration time in association with each other in the viewing information storage means 284. The verification information transmission means 268 refers to the viewing information storage means 284, and confirms the expiration time of the event ID to be transmitted. If it is within the expiration time, the verification information is transmitted. If the expiration time has elapsed, the verification information transmission means 268 judges this as an authentication not established, without transmitting the verification information. By this, an unnecessary increase in communication traffic can be suppressed.

In the description of the present embodiment, whether a predetermined program was watched or not is verified using an event ID, but instead of an event ID, other identifiers may be used to verify whether the program was watched, only if such an identifier can uniquely specify each program and can be included in the digital broadcasting signals, which are transmitted from the digital broadcasting transmission system 10.

## Claims

1. A communication broadcasting linkage service providing system comprising: a digital broadcasting transmission system for transmitting digital broadcasting; a digital broadcasting receiver for receiving digital broadcasting; and a verification management system for verifying whether a viewer watched a program, wherein
the digital broadcasting transmission system comprises means for transmitting digital broadcasting program data including an identifier for uniquely specifying a program,
the digital broadcasting receiver comprises:
digital broadcasting receiving means for receiving the digital broadcasting program data transmitted from the digital broadcasting transmission system;
viewing information acquisition means for acquiring an identifier from the digital broadcasting program data received by the digital broadcasting receiving means and recording the identifier in viewing information storage means; and
transmission means for transmitting verification information including the identifier stored in the viewing information storage means, and
the verification management system comprises:
on-air information storage means for receiving the digital broadcasting program data transmitted from the digital broadcasting transmission system, and storing an identifier assigned to the program, in association with an expiration time of the identifier;
communication means for receiving the verification information transmitted from the digital broadcasting receiver; and
verification means for comparing the identifier included in the verification information received by the communication means and the identifier stored in the on-air information storage means, and authenticating whether the viewer watched the program, and not establishing authentication if the identifier to be verified exceeds the expiration date.

2. The communication broadcasting linkage system according to Claim 1, wherein
the viewing information acquisition means records the identifier acquired from the digital broadcasting program data in the viewing information storage means in association with viewing date and time information on a date and time when a viewer watches the program,
the verification information transmitted by the transmission means includes not only an identifier but also the viewing date and time information recorded in the viewing information storage means in association with the identifier,
the on-air information storage means stores an identifier of a program in association with broadcasting date and time information on a broadcasting date and time of the program, and
the verification means not only verifies the identifier but also compares the viewing date and time information included in the verification information received by the communication means and the broadcasting date and time information stored in the on-air information storage means, and authenticates whether the viewer watched the program.

3. The communication broadcasting linkage service providing system according to Claim 1 or Claim 2, wherein the identifier is an event ID which is assigned to each program for uniquely specifying a program.

4. The communication broadcasting linkage service providing system according to any one of Claim 1 to Claim 3, wherein
the verification management system further comprises benefit granting means for transmitting information on a benefit when it is authenticated that the viewer watched the program as a result of the authentication by the verification means, and
the digital broadcasting receiver further comprises benefit storage means for storing information on a benefit transmitted by the benefit granting means when the information on a benefit is received.

5. The communication broadcasting linkage service providing system according to Claim 4, further comprising a store terminal that is an information terminal device installed at a store or a commerce server for managing an electronic commerce site, wherein
the store terminal comprises means for receiving the verification information transmitted from the digital broadcasting receiver and transmitting the received verification information to the verification management system, and
means for receiving the information on a benefit transmitted from the verification management system and transmitting the information to the digital broadcasting receiver.

6. The communication broadcasting linkage service system according to Claim 5, wherein when receiving the information on a benefit transmitted from the verification management system, the store terminal reduces the settlement of a user of the digital broadcasting receiver instead of transmitting the information to the digital broadcasting receiver.

7. A method for providing a service to a viewer in a communication broadcasting linkage service providing system which comprises a digital broadcasting transmission system for transmitting digital broadcasting, a digital broadcasting receiver for receiving digital broadcasting, and a verification management system for verifying whether a viewer watched a program, the method comprising the steps of:
the digital broadcasting transmission system transmitting digital broadcasting program data including an identifier for uniquely specifying a program;
the verification management system receiving the digital broadcasting program data transmitted from the digital broadcasting transmission system, and recording an identifier assigned to the program in on-air information storage means, in association with an expiration time of the identifier;
the digital broadcasting receiver receiving the digital broadcasting program data transmitted from the digital broadcasting transmission system;
the digital broadcasting receiver acquiring an identifier from the received digital broadcasting program data in viewing information storage means;
the digital broadcasting receiver transmitting verification information including the identifier stored in the viewing information storage means;
the verification management system receiving the verification information transmitted from the digital broadcasting receiver; and
the verification management system comparing the identifier included in the received verification information and the identifier stored in the on-air information storage means, and authenticating whether the viewer watched the program, and not establishing authentication if the identifier to be verified exceeds the expiration time.

8. The service providing method according to Claim 7, further comprising:
a step of the verification management system transmitting information on a benefit when it is authenticated that the viewer watched the program as a result of the authentication, and
a step of the digital broadcasting receiver storing the information on a benefit when receiving the information on a benefit.

9. A verification management system, comprising:
on-air information storage means for receiving digital broadcasting program data on a program being broadcast, and storing an identifier which is included in the digital broadcasting program data and which uniquely specifies the program, in association with an expiration time of the identifier;
communication means for receiving verification information transmitted from a digital broadcasting receiver; and
verification means for comparing an identifier included in the verification information received by the communication means and the identifier stored in the on-air information storage means, and authenticating whether a viewer watched the program, and not establishing authentication if the identifier to be verified exceeds the expiration time.

10. The verification management system according to Claim 9, wherein
the on-air information storage means stores an identifier of a program in association with broadcasting date and time information on a broadcasting date and time of the program, and
the verification means not only verifies the identifier but also compares the viewing date and time information included in the verification information received by the communication means and the broadcasting date and time information stored in the on-air information storage means, and authenticates whether the viewer watched the program.

11. The verification management system according to Claim 9 or Claim 10, further comprising benefit granting means for transmitting information on a benefit to the digital broadcasting receiver when it is authenticated that the viewer watched the program as a result of the authentication by the verification means.

12. The verification management system according to any one of Claim 9 to Claim 11, wherein
the on-air information storage means stores verification conditions which specify conditions when it is authenticated whether the viewer watched the program, in association with the identifier, and
the verification means authenticates that the viewer watched the program, when the verification conditions are satisfied.

13. The verification management system according to Claim 11, wherein
the on-air information storage means also stores benefit granting information which specifies information on granting of a benefit, in association with the identifier, and
the benefit granting means refers to the benefit granting information, and decides a benefit to be granted to a viewer.

14. A method of providing a service by authenticating whether a viewer watched a program, based on control of a computer, the method comprising the steps of:
receiving digital broadcasting program data on a program being broadcast and storing an identifier which is included in the digital broadcasting program data and which uniquely specifies the program, in on-air information storage means, in association with an expiration time of the identifier;
receiving verification information transmitted from a digital broadcasting receiver; and
comparing an identifier included in the received verification information and the identifier stored in the on-air information storage means, and authenticating whether a viewer watched the program, and not establishing authentication if the identifier to be verified exceeds the expiration time.

15. A computer readable recording medium on which a program for causing a computer to execute the method according to Claim 14 is recorded.
